# FASCICULE DE BREVET EUROPEEN

(11) **EP 2 959 243 B1**
(45) Date de publication et mention de la délivrance du brevet: **21.06.2017**
(21) Numéro de dépôt: 14713163.5
(22) Date de dépôt: 20.02.2014
(51) Int. Cl.: F25J 3/02, F25J 3/06

(54) **SÉPARATION À TEMPÉRATURE SUBAMBIANTE D'UN MÉLANGE GAZEUX CONTENANT DU DIOXYDE DE CARBONE ET UN CONTAMINANT PLUS LÉGER**
TRENNUNG EINES GASGEMISCHES MIT KOHLENDIOXID UND EINEM LEICHTEREN SCHADSTOFFES BEI NIEDRIGER UMGEBUNGSTEMPERATUR
SEPARATION AT SUB-AMBIENT TEMPERATURE OF A GASEOUS MIXTURE CONTAINING CARBON DIOXIDE AND A LIGHTER CONTAMINANT

(30) Priorité: 21.02.2013 FR 1351483
(43) Date de publication de la demande: 30.12.2015
(73) Titulaire: L'Air Liquide Société Anonyme pour l'Etude et l'Exploitation des Procédés Georges Claude, 75007 Paris (FR)
(72) Inventeur: BRIGLIA, Alain, Hangzhou Zhejiang 310000 (CN); LECLERC, Mathieu, F-75020 Paris (FR)
(74) Mandataire: Mercey, Fiona Susan
(86) Numéro de dépôt international: PCT/FR2014/050351
(87) Numéro de publication internationale: WO 2014/128409

(56) Documents cités:
- EP-A1- 2 023 066
- WO-A1-2012/038637
- US-A1- 2012 137 728

## Description

La présente invention concerne la séparation à température subambiante d'un mélange gazeux contenant du dioxyde de carbone et un gaz plus léger. En particulier, il comprend un procédé et un appareil de séparation d'un mélange gazeux contenant au moins 35% mol de dioxyde de carbone et au moins un gaz plus léger. Le ou les gaz plus légers peuvent être choisis dans la liste suivante : monoxyde de carbone, hydrogène, méthane, oxygène, azote, argon.

Le mélange gazeux peut comprendre au moins 45% mol de dioxyde de carbone ou au moins 55% mol de dioxyde de carbone ou au moins 65% mol de dioxyde de carbone ou au moins 75% mol de dioxyde de carbone.

Le but de la séparation est de produire un fluide plus riche en dioxyde de carbone que le mélange séparé. Ce fluide peut être un gaz à pression ambiante, un gaz à pression plus élevée que l'ambiante, ou un liquide pressurisé. Le gaz peut être produit par la vaporisation d'un liquide.

Des exemples de mélanges pouvant être séparés par le procédé selon l'invention sont :
- le gaz résiduaire d'un procédé d'adsorption produisant un débit riche en hydrogène et un gaz résiduaire contenant au moins 35% mol de dioxyde de carbone, ainsi qu'au moins de l'hydrogène ;
- le gaz résiduaire d'un procédé d'oxycombustion dans lequel un carburant est brûlé en présence d'oxygène pour produire un gaz résiduaire contenant au moins 55% mol de dioxyde de carbone ainsi qu'au moins de l'oxygène et de l'azote.

Une unité de séparation du dioxyde de carbone à température subambiante comprend une étape à température subambiante (parfois dite cryogénique) dans laquelle le mélange sous pression et séché est séparé d'au moins un autre gaz.

L'étape subambiante comprend essentiellement au moins une étape de refroidissement et une étape de condensation partielle. En effet, le gaz qui est traité dans l'étape à température subambiante doit être refroidi jusqu'à des températures proches du point triple du dioxyde de carbone, dans les environs de -56°C. A ces températures, le gaz va partiellement se condenser, le liquide étant particulièrement enrichi en dioxyde de carbone. Il faut alors séparer le liquide du gaz grâce à un pot de séparation. Ce liquide, provenant du pot de séparation, est souvent détendu puis envoyé à une colonne de distillation pour y être purifié.

La pression choisie de la colonne peut être bien plus basse que celle du pot de séparation. A titre d'exemple, dans le cadre de capture de dioxyde de carbone sur gaz résiduaire de PSA H₂ de SMR (« steam methane reformer » ou réformeur à méthane et à vapeur d'eau), la pression de condensation partielle est choisie aux environs de 50 bara, alors que la pression de la colonne est aux environs de 11 bara. La détente dans une vanne du liquide à l'équilibre issu du pot va générer une vaporisation partielle qui va engendrer une baisse importante de la température en sortie de la vanne. Si le liquide avant la vanne est à une température proche du point triple du CO₂, la température en sortie de la vanne peut s'avérer être inférieure à celle du point triple du CO₂. Un risque important de gel du CO₂ contenu et concentré dans le liquide est alors à craindre.

La solution habituellement choisie pour limiter ce refroidissement et le risque de gel associé consiste à réchauffer le liquide issu du pot avant de le détendre. Mais cette solution a un inconvénient majeur : le liquide du pot étant à l'équilibre, son réchauffement va engendrer sa vaporisation partielle. Un mélange diphasique va donc entrer dans la vanne de détente. Cette dernière va être bien plus difficile à contrôler : la mesure du paramètre physique (pression, débit par exemples) réglant l'ouverture de la vanne va être perturbée par la présence de gaz, dont les propriétés physiques sont très différentes du liquide, l'ouverture ou la fermeture de la vanne qui résultera de cette mesure perturbée aura un effet imprévisible sur les propriétés du fluide en sortie de la vanne. La vanne pourrait aussi se dégrader plus rapidement du fait des vitesses respectives du gaz et du liquide et surtout du mode d'écoulement diphasique en entrée de la vanne.

EP-A- 2023066 décrit un procédé selon le préambule de la revendication 1.

Selon un objet de l'invention, il est prévu un procédé selon la revendication 1.

Selon d'autres objets facultatifs de l'invention :
- le liquide enrichi en dioxyde de carbone provenant de la colonne se réchauffe, voire se vaporise au moins partiellement, par échange de chaleur avec le gaz du premier séparateur de phases qui se refroidit de l'étape iii), de préférence dans un échangeur de chaleur indirect dédié.
- au moins une partie du troisième fluide détendu est envoyée à un échangeur de chaleur indirect où elle se réchauffe, voire se vaporise pour former un gaz enrichi en dioxyde de carbone.
- les premier et deuxième séparateurs de phases et, le cas échéant, le troisième séparateur de phases sont des séparateurs de phases effectuant une séparation équivalente à un seul plateau théorique.

Selon un autre objet de l'invention, il est prévu, un appareil selon la revendication 5.

Selon d'autres caractéristiques facultatives, l'appareil comprend :
- des moyens pour envoyer le liquide enrichi en dioxyde de carbone provenant de la colonne se réchauffer, voire se vaporiser au moins partiellement, par échange de chaleur avec le gaz du premier séparateur de phases dans le moyen de refroidissement.
- un troisième séparateur de phases qui est l'enceinte, une conduite pour envoyer une partie du troisième fluide détendu au troisième séparateur de phases et une conduite pour envoyer une partie du débit détendu se réchauffer par échange de chaleur avec le mélange gazeux provenant du premier séparateur de phases.
- un échangeur de chaleur indirect et une conduite pour envoyer au moins une partie du troisième fluide détendu à l'échangeur de chaleur indirect pour s'y réchauffer.

La présente invention permet d'obtenir un liquide suffisamment chaud en entrée de vanne pour éviter une température trop basse en sortie de la vanne de détente. Il s'agit de faire une première condensation partielle à une première température T1 suivi d'une seconde condensation partielle à une seconde température T2 proche du point triple du CO₂ (avec T1>T2). Le mélange du liquide du premier pot avec celui du second sera à une température intermédiaire entre T1 et T2 et il n'y aura pas de génération de vapeur car le liquide résultant du mélange sera aussi à l'équilibre. En effet, la composition du mélange sera intermédiaire entre la composition du liquide du premier pot et celle du second pot. Il y aura aussi moins de pertes d'énergie dans le cadre de l'invention car l'échange de chaleur pour réchauffer le liquide en entrée de vanne se fait par contact direct.

Les deux étapes de condensation partielle pourront être réalisées dans deux échangeurs distincts ou dans le même échangeur si sa technologie le permet (comme les échangeurs en aluminium brasé par exemple).

L'invention sera décrite de façon plus détaillée en se référant aux figures, qui représentent des procédés de séparation d'un mélange gazeux selon l'invention.

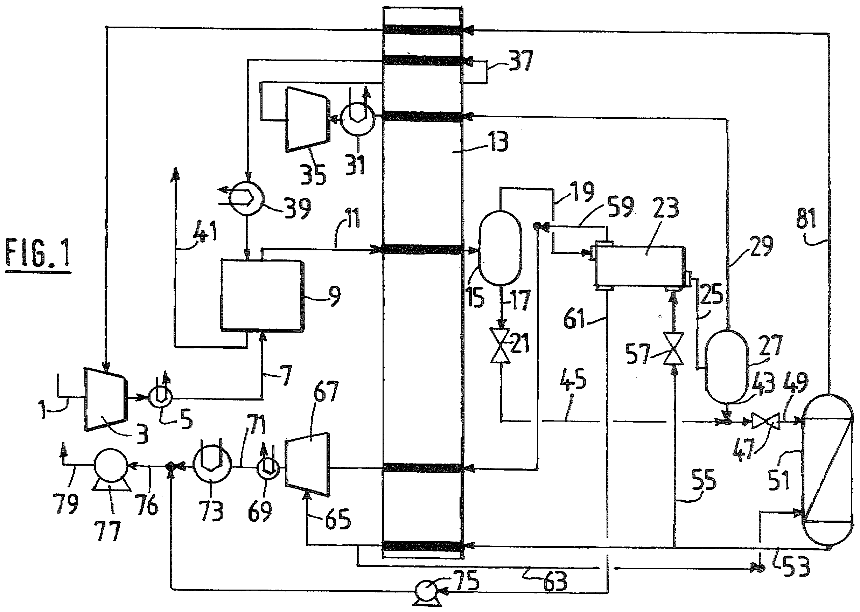

Dans la Figure 1, un mélange gazeux 1 est comprimé dans un compresseur 3 jusqu'à une pression de 23 bars. Après refroidissement dans un refroidisseur 5, le débit refroidi 7 est épuré en eau dans une unité d'épuration 9 pour produire un mélange gazeux sec 11. Il sera compris que ces étapes sont facultatives si le mélange 1 est sec et sous pression. Pour cet exemple, le débit 11 contient 87% CO₂, 4% d'oxygène, 5% d'azote, 3,9% d'argon et 0,1% de monoxyde de carbone. Le débit gazeux 11 à température ambiante est envoyé dans un échangeur de chaleur 13 à plaques en aluminium brasé où il se refroidit jusqu'à -36°C et se condense partiellement. Le débit partiellement condensé est envoyé dans un premier séparateur de phases 15 qui produit un gaz de tête 19 et un liquide de cuve 17. Le liquide de cuve contient 98% de dioxyde de carbone, 0,6% d'oxygène, 0,7% d'azote, 0,8% d'argon et une petite quantité de monoxyde de carbone. Le gaz 19 est enrichi en contaminants légers et ne contient que 64% de dioxyde de carbone. Le gaz 19 est refroidi dans un échangeur 23 jusqu'à une température de -52,5°C, proche de la température du point triple du dioxyde de carbone. Ainsi, le gaz se condense partiellement. Le débit partiellement condensé 25 est envoyé à un deuxième séparateur de phases 27. Le gaz formé 29 est réchauffé dans l'échangeur 13 et le réchauffeur 31 pour être détendu dans une turbine 35 à partir de 23 bars pour fournir du froid. Le débit détendu 37 est réintroduit au bout froid de l'échangeur 13, se réchauffe et est réchauffe par le réchauffeur 39 afin de pouvoir régénérer l'unité d'épuration 9 de manière connue. Le gaz 41 ayant servi à la régénération est envoyé à l'atmosphère.

L'échangeur 23 peut être un échangeur à plaques en aluminium brasé ou un échangeur du type tube-calandres. Le gaz 19 y subit une petite perte de charge de l'ordre de 0,2 bars.

Le liquide 43 provenant du séparateur de phases 27 contient 97% de dioxyde de carbone et est à 22,9 bars et -52,5°C. S'il est détendu à une pression plus basse pour être envoyé à une étape suivante, la température du liquide formé pourrait être en dessous du point triple, engendrant la formation de particules solides.

Pour éviter ce problème, le liquide 43 (27700 kg/h) est mélangé avec le liquide 45 provenant du premier séparateur de phase. Le liquide 45 est produit en détendant le liquide de cuve 17 (131969 kg/h) du premier séparateur 15 pour tenir compte des pertes de charge dans l'échangeur 23. Cette petite détente de 0,2 bars s'effectue dans une vanne 21. Le liquide détendu 45 se trouve à -36°C.

Ainsi en mélangeant les liquides 43, 47, le liquide formé appelé troisième fluide est à -39°C.

Quand le troisième fluide est détendu dans la deuxième vanne 47, le débit formé est biphasique à une température de -47°C et à une pression de 11 bars abs. Le débit 49 est envoyé en tête d'une colonne d'épuisement 51 dont il constitue le seul débit d'alimentation. Le gaz de tête 81 de la colonne 51 se réchauffe dans l'échangeur 13 et est renvoyé au compresseur 3. Le liquide de cuve 53 est divisé en deux. Une partie 55 se vaporise partiellement dans l'échangeur 23 après détente dans la vanne 57. La partie vaporisée 59 se réchauffe dans l'échangeur 13, est comprimée dans un compresseur de produit 67 et se refroidit dans les refroidisseurs 69,73 jusqu' à condensation. La partie restant liquide 61 est pressurisée dans une pompe 75 et mélangée avec le débit 59 après condensation pour former un produit liquide 76 riche en dioxyde de carbone, contenant au moins 70% de dioxyde de carbone, voire au moins 90% de dioxyde de carbone. Ce produit 76 est pressurisé dans une pompe 77 pour faire un produit pressurisé 79.

Une autre partie du liquide de cuve se vaporise dans l'échangeur de chaleur 13 et le gaz formé est divisé en deux. Une partie 63 est renvoyée à la colonne pour faire du rebouillage et le reste 65 est envoyé au compresseur 65.

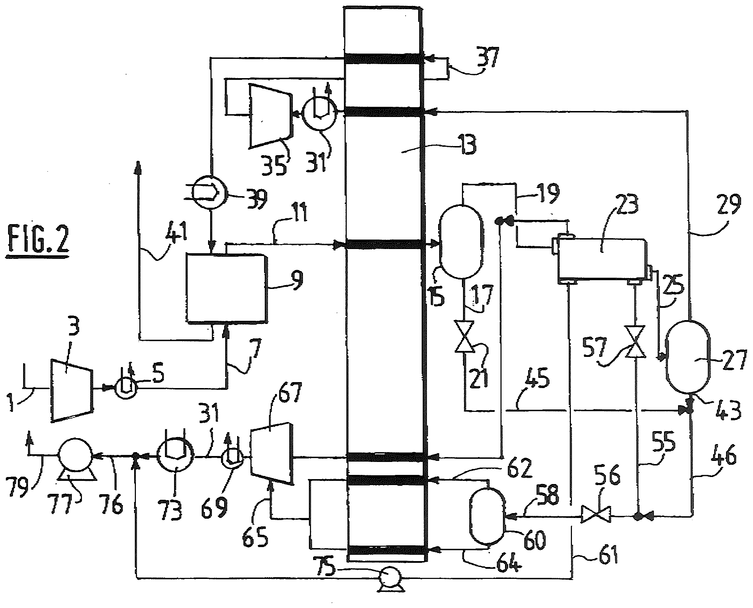

La Figure 2 diffère de la Figure 1 en ce qu'il n'y a pas de colonne de distillation 51. Dans ce cas, les deux vannes où il y a un risque de formation de dioxyde de carbone solides sont les vannes 56, 57. Le liquide 43 du deuxième séparateur de phases 27 est mélangé, comme dans la figure 1, avec le liquide détendu 45 pour augmenter la température. Le troisième fluide formé 46 est divisé en deux, une partie 55 étant envoyée à la vanne 57 pour y être détendue et une autre partie étant envoyée à la vanne 56. Du fait du réchauffage, la température en aval des vannes 56, 57 ne descend pas jusqu'au point triple. Le liquide formé dans la vanne 57 se vaporise partiellement dans l'échangeur 23, comme pour la figure 1. Le liquide 58 provenant de la vanne 56 est biphasique et est envoyé à un troisième séparateur de phases 60. Le gaz 62 du séparateur 60 se réchauffe dans l'échangeur et le liquide 64 s'y vaporise. Les deux gaz formés sont mélangés pour former un débit 65 qui est pressurisé dans le compresseur de produit 67.

Le procédé et l'appareil selon l'invention peuvent également être utilisés pour séparer des mélanges moins riches en CO₂ ou plus riches en CO₂ que ceux des exemples.

Il est possible de combiner des aspects des Figures 1 et 2, par exemple en envoyant une partie du débit détendu dans la deuxième vanne à la distillation et une autre partie à un échangeur de chaleur indirect et/ou à un troisième séparateur de phases.

## Revendications

1. Procédé de séparation d'un mélange gazeux (1, 7, 11) contenant au moins 35% mol. de dioxyde de carbone, voire au moins 45% mol. de dioxyde de carbone ainsi qu'au moins un gaz plus léger que le dioxyde de carbone dans lequel :
i) le mélange est refroidi pour former un premier débit partiellement condensé,
ii) le premier débit partiellement condensé est envoyé à un premier séparateur de phase (15),
iii) un gaz (19) du premier séparateur de phase, contenant moins de dioxyde de carbone que le mélange gazeux, est refroidi, sans avoir été comprimé, pour former un deuxième débit partiellement condensé,
iv) le deuxième débit partiellement condensé est envoyé à un deuxième séparateur de phases (27),
v) un liquide (17) soutiré du premier séparateur de phases, contenant plus de dioxyde de carbone que le mélangé gazeux, est détendu, sans avoir été réchauffé, dans une première vanne (21) pour baisser sa pression d'au plus 300 mbar pour former un premier liquide détendu,
vi) le premier liquide détendu (45) est mélangé avec un deuxième liquide (47) provenant du deuxième séparateur de phases, le deuxième liquide n'ayant pas été détendu ou réchauffé avant d'être mélangé avec le premier liquide détendu, pour former un troisième fluide constitué à au moins 99,9% de liquide, la température du premier liquide détendu étant supérieure à la température du deuxième liquide,
vii) le troisième fluide est détendu dans une deuxième vanne (47, 56, 57) à une pression telle que la pression partielle du dioxyde de carbone dans le troisième fluide détendu est supérieure à 5,28 bars abs et
viii) le troisième fluide détendu est envoyé au moins en partie à une enceinte (51, 60) et/ou à un échangeur de chaleur indirect (23), sans avoir été réchauffé, tel que le deuxième liquide du deuxième séparateur de phases atteindrait une température inférieure à -54,5°C s'il avait été détendu, sans avoir été mélangé au premier liquide détendu, jusqu'à la pression de l'enceinte et/ou de l'échangeur de chaleur indirect **caractérisé en ce que** la température du troisième fluide détendu est supérieure à -54,5°C et
a) au moins une partie du troisième fluide détendu (49) est envoyée en tête d'une simple colonne de distillation (51) pour alimenter la colonne et y être séparée, un gaz (81) est soutiré de la tête de la colonne et un liquide (53) enrichi en dioxyde de carbone par rapport au mélange gazeux est soutiré en cuve de la colonne et le liquide enrichi en dioxyde de carbone (53) se vaporise par échange de chaleur avec le mélange gazeux (11) qui se refroidit de l'étape i) ou
b) au moins une partie du troisième fluide détendu est envoyé à un troisième séparateur de phases (60) et le gaz (62) du troisième séparateur de phases est réchauffé et/ou le liquide (64) du troisième séparateur de phases est vaporisé par échange de chaleur avec le mélange gazeux (11) de l'étape i).

2. Procédé selon la revendication 1, dans lequel du liquide (53) enrichi en dioxyde de carbone provenant de la colonne (51) se réchauffe, voire se vaporise au moins partiellement, par échange de chaleur avec le gaz (19) du premier séparateur de phases qui se refroidit de l'étape iii), de préférence dans un échangeur de chaleur indirect dédié (23).

3. Procédé selon l'une des revendications précédentes, dans lequel au moins une partie du troisième fluide détendu est envoyée à un échangeur de chaleur indirect (13) où il se réchauffe, voire se vaporise pour former un gaz (65) enrichi en dioxyde de carbone.

4. Procédé selon l'une des revendications précédentes, dans lequel les premier et deuxième séparateurs de phases (15, 27) et, le cas échéant, le troisième séparateur de phases (60) sont des séparateurs de phases effectuant une séparation équivalente à un seul plateau théorique.

5. Appareil de séparation d'un mélange gazeux contenant au moins 35% mol. de dioxyde de carbone, voire au moins 45% mol. de dioxyde de carbone ainsi qu'au moins un gaz plus léger que le dioxyde de carbone comprenant une ligne d'échange (13), une conduite pour envoyer le mélange se refroidir dans la ligne d'échange pour former un premier débit partiellement condensé, un premier séparateur de phases (15), une conduite pour envoyer le premier débit partiellement condensé est envoyé de la ligne d'échange au premier séparateur de phase, un moyen de refroidissement (11, 23), une conduite pour envoyer un gaz du premier séparateur de phase, contenant moins de dioxyde de carbone que le mélange gazeux, se refroidir par le moyen de refroidissement, sans avoir été comprimé, pour former un deuxième débit partiellement condensé, un deuxième séparateur de phases (27), une conduite pour envoyer le deuxième débit partiellement condensé à un deuxième séparateur de phases, une première vanne (21), une conduite pour envoyer un liquide soutiré du premier séparateur de phases, contenant plus de dioxyde de carbone que le mélangé gazeux, se détendre, sans moyens de réchauffage en amont de la première vanne et en aval du premier séparateur de phases, dans la première vanne pour baisser sa pression d'au plus 300 mbar et pour former un premier liquide détendu, des moyens de mélange pour mélanger le premier liquide détendu avec un deuxième liquide provenant du deuxième séparateur de phases, ne comprenant pas de moyens pour détendre ou pour réchauffer le deuxième liquide en amont des moyens de mélange, pour former un fluide constitué à au moins 99,9% de liquide, l'appareil étant agencé de sorte que, en usage, la température du premier liquide détendu est supérieure à la température du deuxième liquide, une deuxième vanne (47, 56, 57) pour détendre le troisième fluide à une pression telle que la pression partielle du dioxyde de carbone dans le troisième fluide détendu est supérieure à 5,28 bars abs et la température du troisième fluide détendu est supérieure à -54,5°C, et une conduite pour envoyer le troisième fluide détendu de la deuxième vanne au moins en partie à une enceinte (51, 60) et/ou à un échangeur de chaleur indirect (23), sans moyens de réchauffage entre la deuxième vanne et l'enceinte ou l'échangeur de chaleur indirect **caractérisé en ce qu'**il comprend
a) une simple colonne de distillation (51), la deuxième vanne (47) étant reliée à la tête de la colonne pour y envoyer au moins une partie du troisième fluide détendu pour alimenter la colonne et y être séparée, une conduite pour soutirer un gaz (81) de la tête de la colonne et une conduite pour soutirer un liquide (53) enrichi en dioxyde de carbone par rapport au mélange gazeux en cuve de la colonne et des moyens pour envoyer le liquide enrichi en dioxyde de carbone provenant de la colonne se vaporiser par échange de chaleur avec le mélange gazeux dans la ligne d'échange pour former un premier débit partiellement condensé ou
b) un troisième séparateur de phases (60), une conduite pour envoyer au moins une partie (58) du troisième fluide détendu au troisième séparateur de phases et des moyens pour envoyer un gaz (62) ou un liquide (64) provenant du troisième séparateur de phases se réchauffer par échange de chaleur avec le mélange gazeux (11 dans la ligne d'échange pour former un premier débit partiellement condensé.

6. Appareil selon l'une des revendication 5 comprenant des moyens pour envoyer du liquide (53) enrichi en dioxyde de carbone provenant de la colonne (51) se réchauffer, voire se vaporiser au moins partiellement, par échange de chaleur avec le gaz (19) du premier séparateur de phases dans le moyen de refroidissement (23).

7. Appareil selon la revendication 5 comprenant un troisième séparateur de phases (60) qui est l'enceinte, une conduite pour envoyer une partie (58) du troisième fluide détendu au troisième séparateur de phases et une conduite pour envoyer une partie (55) du débit détendu se réchauffer par échange de chaleur avec le mélange gazeux provenant du premier séparateur de phases (15).

8. Appareil selon l'une des revendications précédentes 5 à 7 dans lequel le moyen de refroidissement est la ligne d'échange (13).

9. Appareil selon l'une des revendications précédentes 5 à 8 dans lequel le moyen de refroidissement (23) est un échangeur de chaleur autre que la ligne d'échange (13).

## Patentansprüche

1. Verfahren zur Trennung eines Gasgemisches (1, 7, 11), das mindestens 35 Mol-% Kohlendioxid, sogar mindestens 45 Mol-% Kohlendioxid sowie mindestens ein leichteres Gas als Kohlendioxid enthält, wobei:
i) das Gemisch gekühlt wird, um eine erste teilweise kondensierte Flussrate zu bilden,
ii) die erste teilweise kondensierte Flussrate zu einem ersten Phasenscheider (15) geleitet wird,
iii) ein Gas (19) des ersten Phasenscheiders, das weniger Kohlendioxid als das Gasgemisch enthält, gekühlt wird, ohne dass es komprimiert worden ist, um eine zweite teilweise kondensierte Flussrate zu bilden,
iv) die zweite teilweise kondensierte Flussrate zu einem zweiten Phasenscheider (27) geleitet wird,
v) eine aus dem ersten Phasenscheider abgezogene Flüssigkeit (17), die mehr Kohlendioxid als das Gasgemisch enthält, ohne erwärmt worden zu sein, in einem ersten Ventil (21) entspannt wird, um ihren Druck von höchstens 300 mbar zur Bildung einer ersten entspannten Flüssigkeit zu senken,
vi) die erste entspannte Flüssigkeit (45) mit einer zweiten Flüssigkeit (47) aus dem zweiten Phasenscheider gemischt wird, wobei die zweite Flüssigkeit vor der Vermischung mit der ersten entspannten Flüssigkeit weder entspannt noch erwärmt worden ist, um ein drittes Fluid zu bilden, das aus mindestens 99,9 % Flüssigkeit besteht, wobei die Temperatur der ersten entspannten Flüssigkeit größer als die Temperatur der zweiten Flüssigkeit ist,
vii) das dritte Fluid in einem zweiten Ventil (47, 56, 57) mit einem solchen Druck entspannt wird, dass der Partialdruck des Kohlendioxids im dritten entspannten Fluid größer als 5,28 bar abs. ist und
viii) das dritte entspannte Fluid mindestens zum Teil zu einem Behälter (51, 60) und/oder indirekten Wärmeaustauscher (23), ohne erwärmt worden zu sein, geleitet wird, so dass die zweite Flüssigkeit des zweiten Phasenscheiders bei Entspannung eine Temperatur unter -54,5 °C erreichen würde, ohne Vermischung mit der ersten entspannten Flüssigkeit, bis der Druck des Behälters und/oder des indirekten Wärmeaustauschers erreicht ist, **dadurch gekennzeichnet, dass** die Temperatur des dritten entspannten Fluides über -54,5 °C liegt und
a) mindestens ein Teil des dritten entspannten Fluides (49) in den Kopf einer einfachen Destillationskolonne (51) zur Speisung der Kolonne und zur dortigen Trennung geleitet wird, wobei ein Gas (81) aus dem Kopf der Destillationskolonne abgezogen und eine Kohlendioxid-angereicherte Flüssigkeit (53) im Verhältnis zum Gasgemisch aus dem Sumpf der Kolonne abgezogen wird und die mit Kohlendioxid-angereicherte Flüssigkeit (53) durch Wärmeaustausch mit dem Gasgemisch (11), das sich aus Schritt i) abkühlt, verdampft oder
b) mindestens ein Teil des dritten entspannten Fluides zu einem dritten Phasenscheider (60) geleitet wird und das Gas (62) des dritten Phasenscheiders erwärmt wird und/oder die Flüssigkeit (64) des dritten Phasenscheiders durch Wärmeaustausch mit dem Gasgemisch (11) aus Schritt i) verdampft.

2. Verfahren nach Anspruch 1, wobei sich mit Kohlendioxid-angereicherte Flüssigkeit (53) aus der Kolonne (51) erwärmt, sogar mindestens teilweise verdampft, durch Wärmeaustausch mit dem Gas (19) des ersten Phasenscheiders, das sich aus Schritt iii) abkühlt, vorzugsweise in einem dafür vorgesehenen indirekten Wärmeaustauscher (23).

3. Verfahren nach einem der vorhergehenden Ansprüche, wobei mindestens ein Teil des dritten entspannten Fluides zu einem indirekten Wärmeaustauscher (13) geleitet wird, wo es sich erwärmt, sogar verdampft, um ein mit Kohlendioxid-angereichertes Gas (65) zu bilden.

4. Verfahren nach einem der vorhergehenden Ansprüche, wobei der erste und zweite Phasenscheider (15, 27) und, gegebenenfalls, der dritte Phasenscheider (60) solche Phasenscheider sind, die eine äquivalente Trennung auf nur einem theoretischen Boden durchführen.

5. Vorrichtung zur Trennung eines Gasgemisches, das mindestens 35 Mol-% Kohlendioxid, sogar mindestens 45 Mol-% Kohlendioxid sowie mindestens ein leichteres Gas als Kohlendioxid enthält, umfassend eine Austauschleitung (13), eine Leitung zum Leiten des Gemischs zur Abkühlung in der Austauschleitung, um eine erste teilweise kondensierte Flussrate zu bilden, einen ersten Phasenscheider (15), eine Leitung zum Leiten der ersten teilweise kondensierten Flussrate wird aus der Austauschleitung zum ersten Phasenscheider geleitet, ein Mittel zur Abkühlung (11, 23), eine Leitung zum Leiten eines Gases des ersten Phasenscheiders, das weniger Kohlendioxid als das Gasgemisch enthält, zur Abkühlung durch das Mittel zur Abkühlung, ohne komprimiert worden zu sein, um eine zweite teilweise kondensierte Flussrate zu bilden, einen zweiten Phasenscheider (27), eine Leitung zum Leiten der zweiten teilweise kondensierten Flussrate in einen zweiten Phasenscheider, ein erstes Ventil (21), eine Leitung zum Leiten einer aus dem ersten Phasenscheider abgezogenen Flüssigkeit, die mehr Kohlendioxid als das Gasgemisch enthält, zur Entspannung, ohne Mittel zur Erwärmung stromauf des ersten Ventils und stromab des ersten Phasenscheiders, im ersten Ventil zur Senkung seines Drucks von höchstens 300 mbar und zur Bildung einer ersten entspannten Flüssigkeit, wobei die Mischmittel zum Mischen der ersten entspannten Flüssigkeit mit einer zweiten Flüssigkeit aus dem zweiten Phasenscheider, keine Mittel zur Entspannung oder zur Erwärmung der zweiten Flüssigkeit stromauf der Mischmittel umfassen, zur Bildung eines Fluides, das aus mindestens 99,9 % Flüssigkeit besteht, wobei die Vorrichtung derart angeordnet ist, dass, im Gebrauch, die Temperatur der ersten entspannten Flüssigkeit über der Temperatur der zweiten Flüssigkeit liegt, ein zweites Ventil (47, 56, 57) zur Entspannung des dritten Fluides mit einem solchen Druck, dass der Partialdruck des Kohlendioxids im dritten entspannten Fluid größer als 5,28 bar abs. und die Temperatur des dritten entspannten Fluides höher als -54,5 °C ist, und eine Leitung zum Leiten des dritten entspannten Fluides des zweiten Ventils mindestens zum Teil in einen Behälter (51, 60) und/oder einen indirekten Wärmeaustauscher (23), ohne Mittel zur Erwärmung zwischen dem zweiten Ventil und dem Behälter oder dem indirekten Wärmeaustauscher, **dadurch gekennzeichnet, dass** diese Folgendes umfasst:
a) eine einfache Destillationskolonne (51), wobei das zweite Ventil (47) mit dem Kopf der Kolonne verbunden ist, um dort mindestens einen Teil des dritten entspannten Fluides zur Speisung der Kolonne und zur dortigen Trennung zu leiten, eine Leitung zum Abziehen eines Gases (81) aus dem Kopf der Kolonne und eine Leitung zum Abziehen einer Kohlendioxid-angereicherten Flüssigkeit (53) im Verhältnis zum Gasgemisch aus dem Sumpf der Kolonne und Mittel zum Leiten der Kohlendioxid-angereicherten Flüssigkeit aus der Kolonne zum Verdampfen durch Wärmeaustausch mit dem Gasgemisch in der Austauschleitung zur Bildung einer ersten teilweise kondensierten Flussrate oder
b) einen dritten Phasenscheider (60), eine Leitung zum Leiten mindestens eines Teils (58) des dritten entspannten Fluides in den dritten Phasenscheider und Mittel zum Leiten eines Gases (62) oder einer Flüssigkeit (64) aus dem dritten Phasenscheider zur Erwärmung durch Wärmeaustausch mit dem Gasgemisch (11) in der Austauschleitung zur Bildung einer ersten teilweise kondensierten Flussrate.

6. Vorrichtung nach einem der Ansprüche 5, umfassend Mittel zum Leiten der Kohlendioxid-angereicherten Flüssigkeit (53) aus der Kolonne (51), zur Erwärmung, sogar mindestens teilweise zum Verdampfen, durch Wärmeaustausch mit dem Gas (19) des ersten Phasenscheiders im Mittel zur Abkühlung (23)

7. Vorrichtung nach Anspruch 5, umfassend einen dritten Phasenscheider (60), welcher der Behälter ist, eine Leitung zum Leiten eines Teils (58) des dritten entspannten Fluides in den dritten Phasenscheider und eine Leitung zum Leiten eines Teils (55) der entspannten Flussrate zur Erwärmung durch Wärmeaustausch mit dem Gasgemisch aus dem ersten Phasenscheider (15).

8. Vorrichtung nach einem der vorhergehenden Ansprüche 5 bis 7, wobei das Mittel zur Abkühlung die Austauschleitung (13) ist.

9. Vorrichtung nach einem der vorhergehenden Ansprüche 5 bis 8, wobei das Mittel zur Abkühlung (23) ein anderer Wärmeaustauscher als die Austauschleitung (13) ist.

## Claims

1. Method for separating a gas mixture (1, 7, 11) containing at least 35mol% carbon dioxide, or even at least 45 mol% carbon dioxide, as well as at least one gas that is lighter than carbon dioxide wherein:
i) the mixture is cooled to form a first stream that is partly condensed,
ii) the first partly condensed stream is directed to a first phase separator (15),
iii) a gas (19) from the first phase separator, containing less carbon dioxide than the gas mixture, is cooled, without having been compressed, to form a second partly condensed stream,
iv) the second partly condensed stream is directed to a second phase separator (27),
v) a liquid (17) drawn from the first phase separator, containing more carbon dioxide than the gas mixture, is depressurised, without having been reheated, in a first valve (21) to reduce its pressure to a maximum of 300 mbar to form a first depressurised liquid,
vi) the first depressurised liquid (45) is mixed with a second liquid (47) originating from the second phase separator, with the second liquid not having been depressurised or reheated before being mixed with the first depressurised liquid, to form a third fluid composed of at least 99.9% liquid, with the temperature of the first depressurised liquid being higher than the temperature of the second liquid,
vii) the third fluid is depressurised in a second valve (47, 56, 57) to a pressure such that the partial pressure of the carbon dioxide in the third depressurised fluid is above 5.28 bars(a) and
viii) the third depressurised fluid is directed at least in part to a chamber (51, 60) and/or an indirect heat exchanger (23), without having been reheated, such that the second liquid from the second phase separator would reach a temperature of less than -54.5°C if it had been depressurised, without having been mixed with the first depressurised liquid, as far as the pressure in the chamber and/or the indirect heat exchanger **characterised in that** the temperature of the third depressurised fluid is above -54.5°C and
a) at least a portion of the third depressurised fluid (49) is directed to the top of a single distillation column (51) to feed the column and be separated there, a gas (81) is drawn from the top of the column and a liquid (53) enriched with carbon dioxide compared to the gas mixture is collected in the column's vessel and the liquid enriched with carbon dioxide (53) vaporizes by exchanging heat with the gas mixture (11) which is cooled at stage i) or
b) at least a portion of the third depressurised fluid is directed to a third phase separator (60) and the gas (62) in the third phase separator is reheated and/or the liquid (64) in the third phase separator is vaporized by exchanging heat with the gas mixture (11) from stage i).

2. Method according to claim 1, wherein the liquid (53) enriched with carbon dioxide originating from the column (51) heats up, or even vaporizes at least partly, by exchanging heat with the gas (19) from the first phase separator which is cooled at stage iii), preferably in a dedicated indirect heat exchanger (23).

3. Method according to one of the previous claims, wherein at least a portion of the third depressurised fluid is directed to an indirect heat exchanger (13) where heats up, or even vaporizes to form a gas (65) enriched with carbon dioxide.

4. Method according to one of the previous claims, wherein the first and second phase separators (15, 27) and, where applicable, the third phase separator (60) are phase separators performing separation equivalent to a single theoretical plate.

5. Device for separating a gas mixture containing at least 35mol% carbon dioxide, or even at least 45mol% carbon dioxide, as well as at least one gas that is lighter than carbon dioxide comprising a heat exchange line (13), a pipe for directing the mixture to cool in the heat exchange line to form a first stream that is partly condensed, a first phase separator (15), a pipe for directing the first partly condensed stream is directed from the heat exchange line to the first phase separator, a cooling system (11, 23), a pipe for directing a gas from the first phase separator, containing less carbon dioxide than the gas mixture, cooled by the cooling system, without having been compressed, to form a second partly condensed stream, a second phase separator (27), a pipe for directing the second partly condensed stream to a second phase separator, a first valve (21), a pipe for directing a liquid drawn from the first phase separator, containing more carbon dioxide than the gas mixture, to depressurise, without reheating systems upstream of the first valve and downstream of the first phase separator, in the first valve to reduce its pressure to a maximum of 300 mbar and to form a first depressurised liquid, mixing systems for mixing the first depressurised liquid with a second liquid originating from the second phase separator, not comprising systems for depressurising or reheating the second liquid upstream of the mixing systems, to form a fluid composed of at least 99.9% liquid, with the device being arranged such that, in use, the temperature of the first depressurised liquid is higher than the temperature of the second liquid, a second valve (47, 56, 57) to depressurise the third fluid to a pressure such that the partial pressure of the carbon dioxide in the third depressurised fluid is above 5.28 bar(a) and the temperature of the third depressurised fluid is above -54.5°C, and a pipe for directing the third depressurised fluid from the second valve at least in part to a chamber (51, 60) and/or to an indirect heat exchanger (23), without reheating systems between the second valve and the chamber or the indirect heat exchanger **characterised in that** it comprises
a) a single distillation column (51), with the second valve (47) being connected to the top of the column in order to direct to it at least a portion of the third depressurised fluid to feed the column and be separated there, a pipe for drawing a gas (81) from the top of the column and a pipe for collecting a liquid (53) enriched with carbon dioxide compared to the gas mixture in the column's vessel and systems for directing the liquid enriched with carbon dioxide originating from the column to vaporize by exchanging heat with the gas mixture from the heat exchange line to form a first partly condensed stream or
b) a third phase separator (60), a pipe for directing at least a portion (58) of the third depressurised fluid to the third phase separator and systems for directing a gas (62) or a liquid (64) originating from the third phase separator to reheat by exchanging heat with the gas mixture (11) from the heat exchange line to form a first partly condensed stream.

6. Device according to one of the claims 5 comprising systems for directing liquid (53) enriched with carbon dioxide originating from the column (51) to reheat, or even vaporize at least partly, by exchanging heat with the gas (19) from the first phase separator in the cooling system (23).

7. Device according to claim 5 comprising a third phase separator (60) that is the chamber, a pipe for directing a portion (58) of the third depressurised fluid to the third phase separator and a pipe for directing a portion (55) of the depressurised stream to reheat by exchanging heat with the gas mixture originating from the first phase separator (15).

8. Device according to one of the previous claims 5 to 7 wherein the cooling system is the heat exchange line (13).

9. Device according to one of the previous claims 5 to 8 wherein the cooling system (23) is a heat exchanger other than the heat exchange line (13).
